# EUROPÄISCHE PATENTSCHRIFT

(11) **EP 2 123 961 B1**
(45) Veröffentlichungstag und Bekanntmachung des Hinweises auf die Patenterteilung: **17.11.2010**
(21) Anmeldenummer: 09003315.0
(22) Anmeldetag: 06.03.2009
(51) Int. Cl.: F16L 55/07, F17C 13/04

(54) **Füllanschluss**
Filling connection
Raccordement de remplissage

(30) Priorität: 19.05.2008 DE 102008024231
(43) Veröffentlichungstag der Anmeldung: 25.11.2009
(73) Patentinhaber: BAUER KOMPRESSOREN GmbH, 81452 München (DE)
(72) Erfinder: Fassmann, Alexander, 85716 Unterschleissheim (DE); Hugo, Hannes, 81547 München (DE)
(74) Vertreter: Hering, Hartmut

(56) Entgegenhaltungen:
- GB-A- 2 440 268
- US-A- 5 289 850

## Beschreibung

Die Erfindung betrifft einen Füllanschluss zum Verbinden eines Füllsystems, wie beispielsweise eines Kompressors, einer Füllleiste oder einer Füllanlage, mit einer aufzufüllenden Druckluft- oder Druckgasflasche.

Ein bekannter Füllanschluss ist an seinem einen Ende mit einem Anschlussgewinde für einen Füllschlauch versehen, der zum Füllsystem führt. An seinem anderen Ende ist der Füllanschluss mit einem passenden Gewinde in Form eines Gewindeeinsatzes versehen, um ihn in ein am Anschluss der Druckluft-oder Druckgasflasche vorgesehenes Gewinde einschrauben zu können. Zur Übertragung der von einer Bedienperson ausgeübten (Hand-)Kraft weist der Füllanschluss einen Schraubring auf, mit welchem die eigentliche Betätigung erfolgt.

Beim Ein- und Ausschrauben des Füllanschlusses in den und aus dem Flaschenanschluss einer Druckluft- oder Druckgasflasche tritt das Problem eines Auftretens eines Überdrucks auf, so dass eine Druckentlastung erfolgen muss. Herkömmlich sind dafür separate Druckentlastungseinrichtungen am Füllanschluss vorgesehen, die über Knöpfe, Hebel oder ähnliche Betätigungseinrichtungen zu bedienen sind. Weil die separat am Füllanschluss vorgesehenen Druckentlastungseinrichtungen separat bedient werden müssen, kann es vorkommen, dass deren Betätigung vergessen wird, was zu ernsthaften Unfällen führen kann.

US-A-5 289 850 offenbart eine Fluidverbindung mit einer Druckentlastungseinrichtung, die über einen Knopf zu bedienen ist.

Ausgehend von einem Füllanschluss mit separaten Druckentlastungseinrichtungen ist es die Aufgabe der vorliegenden Erfindung, einen Füllanschluss zur Verfügung zu stellen, mit welchem Unfälle aufgrund einer fehlerhaften Bedienung weitestgehend vermieden werden können.

Diese Aufgabe wird erfindungsgemäß durch den im Anspruch 1 angegebenen Füllanschluss gelöst. Die abhängigen Ansprüche 2 bis 7 zeigen spezielle Ausführungsformen des Füllanschlusses gemäß Anspruch 1.

Ein Füllanschluss zur Verbindung eines Füllsystems mit einer Druckluft- oder Druckgasflasche, der einen Grundkörper aufweist und an seinem einen Ende mit einem Anschlussgewinde zur Verbindung mit einem zum Füllsystem führenden Füllschlauch versehen ist und an seinem anderen Ende mit einem passenden Gewinde in Form eines am Grundkörper frei drehbar angebrachten Gewindeeinsatzes versehen ist, um ihn mit Hilfe eines am Außenrand des Füllanschlusses vorgesehenen Schraubrings in ein am Anschluss der Druckluft- oder Druckgasflasche vorgesehenes Gewinde einschrauben zu können, zeichnet sich dadurch aus, dass er eine bei Betätigung des Schraubrings durch einen Bediener automatisch betätigte interne Entlüftungseinrichtung aufweist.

Insbesondere erfolgt eine Entlüftung bei dem Füllanschluss gemäß der Erfindung selbsttätig, so dass ein Benutzer keine separaten Druckentlastungseinrichtungen manuell bedienen muss und dies somit auch nicht vergessen kann. Eine Druckentlastung erfolgt erfindungsgemäß automatisch bei einer ohnehin erforderlichen Ein- und Ausschraubbewegung durch Betätigung des Schraubrings durch einen Bediener.

Durch die Relativbewegung zwischen dem Schraubring und dem Gewindeeinsatz erfolgt eine Druckentlastung des Innenraums des Füllanschlusses, und gegebenenfalls auch des Füllschlauchs, mittels der internen Entlüftungseinrichtung. Dadurch werden unerwünschte Beschädigungen am Füllanschluss vermieden.

Bevorzugt ist das Füllsystem an seinem einen Ende mit einem Rückschlagventil versehen.

Vorzugsweise weist die interne Entlüftungseinrichtung ein Entlastungs- oder Entlüftungsventil und einen Bolzen auf und ist der Schraubring derart vorgesehen und ausgestaltet, dass er sich beim Ein- oder Ausschrauben des Füllanschlusses in die oder aus der Druckluft- oder Druckgasflasche um einen definierten Drehwinkel relativ gegenüber dem Gewindeeinsatz bewegt. Dabei betätigt eine am Innendurchmesser des Füllanschlusses vorgesehene Ausbuchtung den Bolzen, um das Entlastungs- oder Entlüftungsventil zu betätigen.

Bevorzugt ist eine Einrichtung zur Begrenzung des Drehwinkels vorgesehen, die besonders bevorzugt ein Zylinderstift ist.

Vorzugsweise ist an dem Ende des Füllanschlusses, an welchem der am Grundkörper frei drehbar angebrachte Gewindeeinsatz vorgesehen ist, ein weiteres Entlastungs- oder Entlüftungsventil vorgesehen, das einen Luftstrom sperrt, wenn keine Druckluft- oder Druckgasflasche an dem Füllanschluss angeschlossen ist.

Insbesondere ist der Schraubring auf der dem Gewindeeinsatz abgewandten Seite mittels einer Scheibe und einem Sicherungsring am Grundkörper gesichert.

Die angegebenen und weitere Merkmale und Einzelheiten der Erfindung werden einem Fachmann auf dem Gebiet aus der folgenden detaillierten Beschreibung und den beigefügten Zeichnungen klarer werden, die Merkmale der vorliegenden Erfindung anhand eines Beispiels darstellen und wobei:
- Fig. 1: eine Schnittansicht eines Füllanschlusses gemäß einer Ausführungs- form der Erfindung zeigt; und
- Fig. 2: eine seitliche Schnittansicht des in Fig. 1 gezeigten Füllanschlusses zeigt.

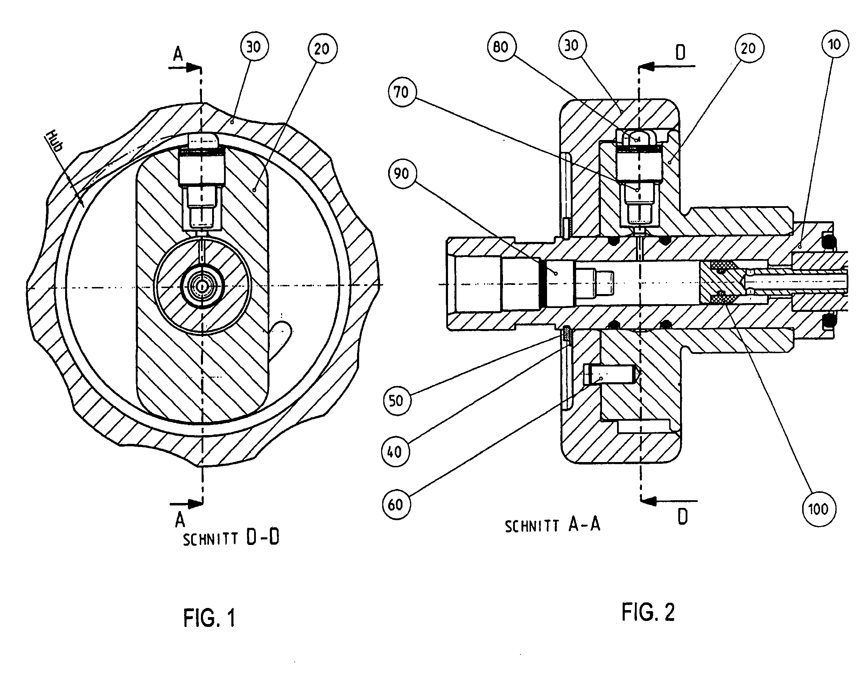

In den Figuren 1 und 2 sind jeweilige Schnittlinien für die jeweils andere Figur jeweils mit A und D bezeichnet.

Im Folgenden wird die vorliegende Erfindung anhand bevorzugter Ausführungsformen unter Bezugnahme auf die beigefügte Zeichnung detailliert erklärt.

Die Figur 1 zeigt eine Schnittansicht eines erfindungsgemäßen Füllanschlusses, wobei insbesondere ein Gewindeeinsatz 20 und ein Schraubring 30 des Füllanschlusses deutlich gezeigt sind. In der Figur 2, die eine seitliche Schnittansicht des in Fig. 1 gezeigten Füllanschlusses zeigt, sind zusätzlich insbesondere ein Grundkörper 10, eine Scheibe 40, ein Sicherungsring 50, ein Zylinderstift 60, ein Entlastungs- oder Entlüftungsventil 70, ein Bolzen 80, ein Rückschlagventil 90 und ein weiteres Entlastungs- oder Entlüftungsventil 100 deutlich gezeigt.

Der zylinderförmig ausgebildete Füllanschluss dient zur Verbindung eines Füllsystems mit einer Druckluft- oder Druckgasflasche. Der Grundkörper 10 des Füllanschlusses ist an seinem einen Ende mit einem Rückschlagventil 90 und mit einem Anschlussgewinde zur Verbindung mit einen zum Füllsystem führenden Füllschlauch versehen und ist an seinem anderen Ende mit einem passenden Gewinde in Form eines am Grundkörper 10 frei drehbar angebrachten Gewindeeinsatzes 20 versehen.

Zur Betätigung des Gewindeeinsatzes 20, um ihn in ein an einer zu füllende Druckluft- oder Druckgasflasche vorgesehenes Gewinde einschrauben oder ihn dann, wenn die Druckluft- oder Druckgasflasche gefüllt ist, wieder aus diesem herausschrauben zu können, ist ein Schraubring 30 am Außenrand des Füllanschlusses vorgesehen. Dieser Schraubring 30 ist derart ausgestaltet, dass bei seiner Betätigung, d.h. beim Einschrauben in ein Gewinde der Druckluft- oder Druckgasflasche oder beim Herausschrauben aus diesem, durch einen Bediener eine erfindungsgemäß im Füllanschluss vorgesehene interne Entlüftungseinrichtung 70, 80 automatisch betätigt wird.

Genauer gesagt besteht die interne Entlüftungseinrichtung 70, 80 aus einem Entlastungs- oder Entlüftungsventil 70 und einem Bolzen 80. Der Schraubring 30 weist an seinem Innendurchmesser eine, in Figur 1 mit "Hub" angezeigte, nach innen gerichtete Ausbuchtung auf und ist derart vorgesehen und ausgestaltet, dass er sich beim Ein- oder Ausschrauben des Füllanschlusses in die oder aus der Druckluft- oder Druckgasflasche um einen definierten Drehwinkel relativ gegenüber dem Gewindeeinsatz 20 bewegt. Durch die am Innendurchmesser nach innen gerichtete Ausbuchtung wird der Bolzen 80 während der Relativbewegung zwischen dem Schraubring 30 und dem Gewindeeinsatz 20 betätigt oder freigegeben, wodurch dann das Entlastungs- oder Entlüftungsventil 70 betätigt wird.

Der Füllanschluss weist auch eine Einrichtung 60 zur Begrenzung des Drehwinkels auf, die in der Figur 2 als Zylinderstift 60 gezeigt ist.

Der Schraubring 30 ist auf der dem Gewindeeinsatz 20 abgewandten Seite mittels einer Scheibe 40 und einem Sicherungsring 50 am Grundkörper 10 gesichert.

Manche Füllsysteme sind mit mehreren Füllschläuchen versehen. Sind in einem solchen Fall während eines Auffüllvorgangs mehrere Füllanschlüsse nicht an jeweilige Flaschen angeschlossen, darf durch diese mehreren Füllanschlüsse dennoch keine Luft austreten. Daher ist an dem Ende des Füllanschlusses, an welchem der am Grundkörper 10 frei drehbar angebrachte Gewindeeinsatz 20 vorgesehen ist, ein weiteres Entlastungs- oder Entlüftungsventil 100 vorgesehen, das einen Luftstrom von der Seite des Füllsystems sperrt, wenn keine Druckluft- oder Druckgasflasche am Füllanschluss angeschlossen ist. Dadurch wird auch ein unkontrolliertes Umherschlagen von nicht belegten Schläuchen sicher verhindert.

Nachfolgend wird die Funktionsweise des erfindungsgemäßen Füllanschlusses detailliert erklärt werden.

Beim Einschrauben des Gewindeeinsatzes 20 des Füllanschlusses in die Druckluftflasche oder Druckgasflasche oder Atemluftflasche (die nachfolgend auch einfach Flasche genannt wird) mittels des Schraubrings 30 bewegt sich dieser zuerst um einen, durch eine mechanische Sperre wie den Zylinderstift 60 begrenzten, vordefinierten Drehwinkel relativ zum Gewindeeinsatz 20, der frei drehbar am Grundkörper 10 angebracht ist.

Durch die Relativbewegung zwischen Schraubring 30 und dem Gewindeeinsatz 20 wird der Innenraum des Füllanschlusses mittels der internen Entlüftungseinrichtung 70 und 80 druckentlastet. Dadurch werden unerwünschte Beschädigungen am Füllanschluss bzw. am Flaschenanschluss vermieden.

Bei Beendigung des Einschraubens ist der Füllanschluss wieder vollkommen dicht. Danach wird das Schraubventil am Flaschenanschluss geöffnet und wird der Füllvorgang begonnen. Dabei wird der Füllschlauch vom Füllsystem mit Druckluft versorgt. Diese kann dann durch den Füllanschluss in die Flasche einströmen.

Nach dem Auffüllen der Flasche schaltet das Füllsystem ab. Dann wird der Füllschlauch wieder druckentlastet und das im Füllanschluss befindliche Rückschlagventil 90 verhindert, dass Luft aus der Flasche entweicht. Als nächstes muss das Schraubventil der Flasche geschlossen werden. Dabei bleiben aber der Innenraum des Füllanschlusses und der Bereich des Flaschenanschlusses weiterhin druckbeaufschlagt.

Solange der Innenraum des Füllanschlusses druckbeaufschlagt ist werden die die Gewindeflanken (des Gewindeeinsatzes des Füllanschlusses und des Gewindes der Flasche) so stark aneinandergedrückt, dass der Füllanschluss nur unter Anwendung von Gewalt herausgeschraubt werden könnte. Würde ein Bediener dies dennoch tun, bestünde hohe Unfallgefahr. Demnach muss der Innenraum des Füllanschlusses vor seinem Herausschrauben aus dem Flaschenanschluss druckentlastet werden. Danach kann der Füllanschluss leicht herausgeschraubt werden, ohne dass eine Unfallgefahr besteht.

Beim erfindungsgemäßen Füllanschluss erfolgt die Druckentlastung durch die zur oben angegebenen Relativbewegung zwischen Schraubring 30 und Gewindeeinsatz 20 gegenläufige Relativbewegung automatisch beim Herausschrauben. Dadurch wird dann die gesamte Füllstrecke drucklos.

Anschließend kann ein neuer Füllvorgang begonnen werden.

Erfindungsgemäß wird durch Vorsehen einer internen Entlüftungseinrichtung in einem Füllanschluss erreicht, dass ein Entlüftungsvorgang auf komfortable Weise automatisch bzw. selbsttätig beim Einschrauben in einen oder beim Ausschrauben aus einem Flaschenanschluss erfolgt, so dass dieser Vorgang nicht vergessen werden kann, was eventuellen Unfällen durch nicht entlüftete Füllanschlüsse vorbeugt. Ein Bediener muss keine separate Entlüftungseinrichtung über Knöpfe, Hebel oder ähnliche Bedienungselemente betätigen.

## Patentansprüche

1. Füllanschluss zur Verbindung eines Füllsystems mit einer Druckluft- oder Druckgasflasche, der einen Grundkörper (10) aufweist und an seinem einen Ende mit einem Anschlussgewinde zur Verbindung mit einem zum Füllsystem führenden Füllschlauch versehen ist und an seinem anderen Ende mit einem passenden Gewinde in Form eines am Grundkörper (10) frei drehbar angebrachten Gewindeeinsatzes (20) versehen ist, um ihn mit Hilfe eines am Außenrand des Füllanschlusses vorgesehenen Schraubrings (30) in ein am Anschluss der Druckluft- oder Druckgasflasche vorgesehenes Gewinde einschrauben zu können, **dadurch gekennzeichnet, dass**
der Füllanschluss eine bei Betätigung des Schraubrings (30) durch einen Bediener automatisch betätigte interne Entlüftungseinrichtung (70, 80) aufweist.

2. Füllanschluss nach Anspruch 1, **dadurch gekennzeichnet, dass** er an seinem einen Ende mit einem Rückschlagventil (90) versehen ist.

3. Füllanschluss nach Anspruch 1 oder 2, **dadurch gekennzeichnet, dass** die interne Entlüftungseinrichtung (70, 80) ein Entlastungs- oder Entlüftungsventil (70) und einen Bolzen (80) aufweist und der Schraubring (30) derart vorgesehen und ausgestaltet ist, dass er sich beim Ein- oder Ausschrauben des Füllanschlusses in die oder aus der Druckluft- oder Druckgasflasche um einen definierten Drehwinkel relativ gegenüber dem Gewindeeinsatz (20) bewegt und dabei eine an seinem Innendurchmesser vorgesehenen Ausbuchtung den Bolzen (80) betätigt oder freigibt, um das Entlastungs- oder Entlüftungsventil (70) zu betätigen.

4. Füllanschluss nach Anspruch 3, **dadurch gekennzeichnet, dass** eine Einrichtung (60) zur Begrenzung des Drehwinkels vorgesehen ist.

5. Füllanschluss nach Anspruch 4, **dadurch gekennzeichnet, dass** die Einrichtung (60) zur Begrenzung des Drehwinkels ein Zylinderstift ist.

6. Füllanschluss nach einem der vorangehenden Ansprüche, **dadurch gekennzeichnet, dass** an dem Ende des Füllanschlusses, an welchem der am Grundkörper (10) frei drehbar angebrachte Gewindeeinsatz (20) vorgesehen ist, ein weiteres Entlastungs- oder Entlüftungsventil (100) vorgesehen ist, das einen Luftstrom sperrt, wenn keine Druckluft- oder Druckgasflasche an dem Füllanschluss angeschlossen ist.

7. Füllanschluss nach einem der vorangehenden Ansprüche, **dadurch gekennzeichnet, dass** der Schraubring (30) ist auf der dem Gewindeeinsatz (20) abgewandten Seite mittels einer Scheibe (40) und einem Sicherungsring (50) am Grundkörper (10) gesichert ist.

## Claims

1. Filling connection, for connecting a filling system with a compressed air or compressed gas bottle, which has a base body (10) and is provided with a connecting thread at its one end for connection to a filling hose leading to a filling system and is provided at its other end with a matching thread in the form of threaded insert mounted to be freely rotatable on the base body (10), in order to allow it to be screwed into a thread provided on the connection to the compressed air or presurised gas bottle with the aid of a threaded ring (30) provided at the outer edge of the filling connection, **characterised in that** the filling connection has an internal venting device (70, 80) that is automatically actuated when the threaded ring (30) is operated by a user.

2. Filling connection in accordance with Claim 1, **characterised in that** it is provided with a check valve (90) at one end.

3. Filling connection in accordance with Claim 1 or Claim 2, **characterised in that** the internal venting device (70, 80) has a relief or venting valve (70) and a pin (80) and the threaded ring (30) is provided and configured in such a way that it turns through a defined angle relative to the threaded insert (20) when the filling connection is screwed in or unscrewed into or out of the compressed air or compressed gas bottle and thereby operates or releases a protrusion provided on the inside diameter of the pin (80), so as to actuate the relief or venting valve (70).

4. Filling connection in accordance with Claim 3, **characterised in that** a device (60) is provided for restricting the angle of rotation.

5. Filling connection in accordance with Claim 4, **characterised in that** the device (60) for restricting the angle of rotation is a cylindrical pin.

6. Filling connection in accordance with one of the preceding Claims, **characterised in that** a further relief or venting valve (100) is provided, at the end of the filling connection at which the threaded insert (20) for free rotation is mounted on the base body (10), which cuts off the air stream when no compressed air or compressed gas bottle is attached to the filling connection.

7. Filling connection in accordance with one of the preceding Claims, **characterised in that** the threaded ring (30) is secured to the base body (10) on the side remote from the threaded insert (20) by means of a washer (40) and a circlip (50).

## Revendications

1. Raccord de remplissage servant à raccorder un système de remplissage à une bouteille d'air comprimé ou de gaz comprimé, raccord de remplissage, qui présente un corps de base (10) et qui est muni, à une de ses extrémités, d'un filetage de raccordement servant au raccordement d'un tuyau de remplissage allant au système de remplissage et, à son autre extrémité, d'un filetage approprié en forme d'insert de filetage (20) fixé sur le corps de base (10) de manière à pouvoir tourner librement, afin de pouvoir le visser, à l'aide d'une bague à visser (30) prévue sur le bord extérieur du raccord de remplissage, dans un filetage prévu sur le raccord de la bouteille d'air comprimé ou de gaz comprimé, **caractérisé en ce que**
le raccord de remplissage présente un dispositif de désaération (70, 80) interne, qui est actionné automatiquement par un actionneur lorsque la bague à visser (30) est actionnée.

2. Raccord de remplissage suivant la revendication 1, **caractérisé en ce qu'**à une de ses extrémités, il est muni d'un clapet de non-retour (90).

3. Raccord de remplissage suivant la revendication 1 ou 2, **caractérisé en ce que** le dispositif de désaération interne (70, 80) présente une soupape de dégagement ou de décharge (70) et un boulon (80) et **en ce que** la bague à visser (30) est prévue et conçue de sorte que lors du vissage du raccord de remplissage dans ou hors de la bouteille d'air comprimé ou de gaz comprimé, elle se déplace d'un angle de rotation défini par rapport à l'insert de filetage (20), un creux prévu sur son diamètre intérieur actionnant ou libérant le boulon (80), afin d'actionner la soupape de dégagement ou de décharge (70).

4. Raccord de remplissage suivant la revendication 3, **caractérisé en ce qu'**est prévu un dispositif (60) servant à délimiter l'angle de rotation.

5. Raccord de remplissage suivant la revendication 4, **caractérisé en ce que** le dispositif (60) servant à la délimitation de l'angle de rotation est une goupille cylindrique.

6. Raccord de remplissage suivant une des revendications précédentes, **caractérisé en ce qu'**à l'extrémité du raccord de remplissage, sur laquelle est prévu l'insert de filetage fixé sur le corps de base (10) de manière pouvoir tourner librement, est prévue une autre soupape de dégagement ou de décharge (100) qui bloque un courant d'air lorsque aucune bouteille d'air comprimé ou de gaz comprimé n'est raccordée au raccord de remplissage.

7. Raccord de remplissage suivant une des revendications précédentes, **caractérisé en ce que** la bague à visser (30) est protégée sur le corps de base (10), sur le côté opposé à l'insert de filetage (20), au moyen d'un disque (40) et d'une bague d'arrêt ressort (50).
